# EUROPÄISCHE PATENTSCHRIFT

(11) **EP 4 046 958 B1**
(45) Veröffentlichungstag und Bekanntmachung des Hinweises auf die Patenterteilung: **03.04.2024**
(21) Anmeldenummer: 22156479.2
(22) Anmeldetag: 14.02.2022
(51) Int. Cl.: B66F 9/06, B66F 9/075, G05D 1/02

(54) **FLURFÖRDERZEUG MIT ERFASSUNGSEINRICHTUNGEN AN GABELZINKEN**
INDUSTRIAL TRUCK WITH DETECTING DEVICES ON FORK TINES
CHARIOT DE MANUTENTION POURVU DE DISPOSITIFS DE DÉTECTION SUR LES DENTS DE FOURCHE

(30) Priorität: 18.02.2021 DE 102021103799
(43) Veröffentlichungstag der Anmeldung: 24.08.2022
(73) Patentinhaber: Jungheinrich Aktiengesellschaft, 22047 Hamburg (DE)
(72) Erfinder: Flottran, Dennis, 23881 Breitenfelde (DE); Schmidt, Carsten, 21354 Bleckede (DE); Fürstenberg, Alexander, 20535 Hamburg (DE)
(74) Vertreter: Weickmann & Weickmann PartmbB

(56) Entgegenhaltungen:
- EP-A1- 3 251 918
- DE-A1-102016 108 392
- JP-A- 2015 170 284

## Beschreibung

Die vorliegende Erfindung betrifft ein Flurförderzeug, insbesondere einen Hubwagen, umfassend einen Fahrzeugkörper, ein Paar sich von dem Fahrzeugkörper zu einem jeweiligen Gabelende in einer Längsrichtung erstreckender Gabelzinken, eine Mehrzahl von Rädern, mit welchen das Flurförderzeug auf einem Fahruntergrund aufsteht und sich auf diesem in einer angetriebenen und gelenkten Weise fortbewegt, wobei jedem der Gabelzinken wenigstens eines der Räder zugeordnet ist, einen Hubmechanismus, welcher dazu eingerichtet ist, die Höhe der Gabelzinken über dem Fahruntergrund einzustellen, eine Mehrzahl von Erfassungseinheiten, welche jeweils dazu eingerichtet sind, in einer Umgebung des Flurförderzeugs befindliche Objekte innerhalb eines Erfassungsbereichs zu erfassen und entsprechende Daten auszugeben, und eine Steuereinheit, welche betriebsmäßig mit den Erfassungseinheiten gekoppelt und dazu eingerichtet ist, die von den Erfassungseinheiten ausgegebenen Daten zu empfangen und zu verarbeiten.

Es ist insbesondere bei automatisierten und autonomen Flurförderzeugen erforderlich, die Umgebung davon möglichst lückenlos zu erfassen, um geforderte Sicherheitsstandards hinsichtlich möglicher Kollisionen mit bewegten oder unbewegten Gegenständen einhalten zu können. Jedoch auch in mit einem Fahrer besetzten Flurförderzeugen können derartige Überwachungseinrichtungen zu einem erhöhten Sicherheitsniveau beitragen, beispielsweise indem auf Grundlage ihrer Ausgaben Signale an den Fahrer ausgegeben werden oder unmittelbar autonom von dem Fahrzeug entsprechende Reaktionshandlungen durchgeführt werden.

Insbesondere in Flurförderzeugen, in welchen Lastrollen in Gabelzinken integriert sind, um dort die Aufgabe von vorderen Rädern des Fahrzeugs zu übernehmen, und die Gabelzinken zur Aufnahme und dem Transport von Lasten mittels des Hubmechanismus vertikal verlagerbar sind, ist es oftmals nicht möglich, die gesamte Umgebung des Fahrzeugs mit lediglich zwei Erfassungseinheiten abzudecken und es ist ebenfalls nicht möglich, mittels am Fahrzeugkörper vorgesehenen Erfassungseinheiten den gesamten Bereich vor dem Fahrzeug, d.h. in der Verlängerung der Gabelzinken in Längsrichtung des Fahrzeugs, lückenlos abzudecken, da die bereits angesprochenen Lastrollen erhebliche Winkelbereiche aus Sicht der Erfassungseinheiten abdecken oder beschatten und es somit zu nicht überwachten Totbereichen kommen kann.

Andererseits ist beispielsweise in der EP 3 034 452 A1 vorgeschlagen worden, in entsprechenden Flurförderzeugen Erfassungseinheiten unmittelbar in die Gabelzinkenspitzen zu verbauen, um eine uneingeschränkte Sicht nach vorne zur Verfügung zu haben. Es zeigt sich jedoch in der Praxis, dass aufgrund der eingeschränkt möglichen Winkelabdeckung derartiger Erfassungseinheiten ebenfalls Überwachungslücken unmittelbar vor den Gabelzinken entstehen können und diese Erfassungseinheiten daher in erster Linie als Assistenzsysteme oder als nicht sicherheitsgerechte Erkennungselemente verwendet werden, um beispielsweise den Bereich vor den Gabelzinken bei Einlagerungsvorgängen besser erfassen zu können. Ferner ist die Integration von funktionellen Komponenten in die Gabelzinkenspitzen technisch anspruchsvoll und aufwendig.

Weitere Beispiele für Flurförderzeuge mit Erfassungseinrichtungen dieser Art sind beispielsweise aus der EP 3 251 918 A1, der JP 2015 170 284 A und der DE 10 2016 108 392 A1 bekannt.

Es ist demzufolge die Aufgabe der vorliegenden Erfindung, ein gattungsgemäßes Flurförderzeug derart weiterzubilden, dass im Wesentlichen der gesamte vor den Gabelzinken liegende Korridor ohne Totbereiche abgedeckt werden kann und gleichzeitig eine relativ kostengünstige und einfache Integration der hierfür notwendigen Erfassungseinheiten an dem Flurförderzeug ohne größere Umgestaltungen daran ermöglicht wird.

Zur Lösung dieser Aufgabe ist in einem erfindungsgemäßen Flurförderzeug jedem der Gabelzinken eine der Erfassungseinheiten zugeordnet, wobei die jeweilige Erfassungseinheit an der Unterseite des entsprechenden Gabelzinkens an einer Position in Längsrichtung davon zwischen dem diesem Gabelzinken zugeordneten Rad bzw. dem vordersten der diesem Gabelzinken zugeordneten Räder und dem Gabelende angeordnet ist, und die den beiden Gabelzinken zugeordneten Erfassungseinheiten derart zueinander ausgerichtet sind, dass ihre jeweiligen Erfassungsbereiche gemeinsam im Wesentlichen den gesamten durch jeweilige gedachte Verlängerungen der beiden Gabelzinken vor den Gabelenden gebildeten Korridor überdecken oder einem der Gabelzinken eine Erfassungseinheit zugeordnet ist, wobei die Erfassungseinheit an der Unterseite des entsprechenden Gabelzinkens an einer Position in Längsrichtung davon zwischen dem diesem Gabelzinken zugeordneten Rad bzw. dem vordersten der diesem Gabelzinken zugeordneten Räder und dem Gabelende angeordnet ist, die dem Gabelzinken zugeordnete Erfassungseinheit derart angeordnet und ausgebildet ist, dass ihr Erfassungsbereich im Wesentlichen den gesamten durch jeweilige Verlängerungen der beiden Gabelzinken vor den Gabelenden gebildeten Korridor überdeckt..

Indem auf diese Weise an der Unterseite entweder von einem oder beiden der Gabelzinken eine Erfassungseinheit an einer Position angeordnet wird, welche durch das entsprechende Rad verdeckte Bereiche vor dem Flurförderzeug verhindert, wird sichergestellt, dass der Korridor vor den beiden Gabelzinken im Wesentlichen vollständig und lückenlos überwacht werden kann. Insbesondere kann in Ausführungsformen, in welchen an jedem der Gabelzinken eine Erfassungseinheit vorgesehen ist, ein Überlapp der Erfassungsbereiche der wenigstens zwei Erfassungseinheiten im Bereich der Gabelzinken vor dem Gabelende erzielt werden, beispielsweise indem jede der beiden Erfassungseinheiten einen Überwachungsbereich von etwa 90° aufweist. Demhingegen erfordert die Ausführungsform mit lediglich einer Erfassungseinheit bei dieser einen vergrößerten Überwachungsbereich, welcher beispielsweise in der Größenordnung von 150° liegen könnte.

Somit kann in dem erfindungsgemäßen Flurförderzeug in einer konstruktiv einfachen Weise eine vollständige Überwachung des Bereichs vor dem Flurförderzeug sichergestellt werden. Hierbei versteht es sich, dass beispielsweise in Ausführungsformen derartiger Flurförderzeuge, in welcher mehrere Räder in jedem der Gabelzinken vorgesehen sind, beispielsweise gemeinsam gelagerte Paare von Rädern, die Position der jeweiligen Erfassungseinheit in Längsrichtung des entsprechenden Gabelzinkens vor dem vordersten dieser Räder liegt.

Wenngleich sich der von den Erfassungseinheiten überwachte Korridor zunächst einmal prinzipiell unendlich weit von den Gabelenden nach vorne erstrecken kann, so wird hier sinnvollerweise ein bestimmtes Abbruchkriterium zu definieren sein, um in einem vorbestimmten Mindestabstand von dem Fahrzeug erfasste Objekte als nicht mehr problematisch einzustufen. Hierzu kann bei Erfassungseinheiten mit der Fähigkeit zur zweidimensionalen Bestimmung von Abständen beispielsweise eine Steuersoftware zu diesem Zweck vorgesehen sein oder bei Sensoren mit einer intrinsisch begrenzten Reichweite der Mindestabstand auch durch diese bereits festgelegt sein. Eine Richtgröße für den Mindestabstand kann hierbei durch den Bremsweg des Flurförderzeugs gebildet sein, wodurch sichergestellt werden kann, dass bei einem Auftreten eines Objekts in dem überwachten Korridor das Flurförderzeug stets noch vollständig abgebremst werden kann, bevor es zu einer Kollision käme. Ferner kann in manchen Ausführungsformen der zu überwachende Korridor auch nicht unmittelbar vor den Gabelzinken beginnen, sondern in einem kleinen Abstand davon, wodurch die Sicherheitswirkung der Überwachung nur wenig beeinträchtigt würde.

Wenngleich, wie angesprochen, das erfindungsgemäße Flurförderzeug automatisiert oder autonom betreibbar sein kann und hierzu die von den Erfassungseinheiten gelieferten Daten einen wertvollen Beitrag zur Erfassung der Umgebung des Flurförderzeugs leisten können, so kann das erfindungsgemäße Flurförderzeug jedoch auch von einem menschlichen Fahrer bedienbar oder ferngesteuert sein, wobei dann die Erfassungseinheiten einen ergänzenden Sicherheitszweck erfüllen können.

In derartigen Typen von Flurförderzeugen wird der Fahrzeugkörper häufig auch als Antriebsteil bezeichnet, da er sämtliche für die Fortbewegung des Flurförderzeugs notwendigen Komponenten aufnimmt, beispielsweise einen Traktionsmotor, eine Lenkvorrichtung und einen Energiespeicher, wie beispielsweise einen Akkumulator.

In einer Weiterbildung des erfindungsgemäßen Flurförderzeugs kann diesem Fahrzeugkörper ferner ebenfalls wenigstens eine der Erfassungseinheiten zugeordnet sein, wobei insbesondere in Ausführungsformen, in welchen dem Fahrzeugkörper wenigstens zwei der Erfassungseinheiten zugeordnet sind und jeweils eine davon mit einer der den Gabelzinken zugeordneten Erfassungseinheiten derart ausgerichtet ist, dass ihre jeweiligen Erfassungsbereiche gemeinsam wenigstens den gesamten Bereich an einer Seite des Flurförderzeugs überdecken, zusätzlich zu dem Korridor vor den Gabelzinken auch noch der gesamte Bereich an wenigstens einer der Seiten des Flurförderzeugs überwacht werden kann.

Insbesondere können hierbei die dem Fahrzeugkörper zugeordneten Erfassungseinheiten und die den Gabelzinken zugeordneten Erfassungseinheiten derart angeordnet sein, dass ihre jeweiligen Erfassungsbereiche gemeinsam im Wesentlichen den gesamten Raum außerhalb des Umrisses des Flurförderzeugs überdecken, also insbesondere auch zusätzlich eine Überwachung hinter dem Flurförderzeug bezogen auf dessen Längsrichtung ermöglicht wird, so dass auch eine Fahrt in einer Richtung entgegen der Erstreckung der Gabelzinken unter erhöhter Sicherheit stattfinden kann.

In Ausführungsformen, in welchen jedem der Gabelzinken eine der Erfassungseinheiten zugeordnet ist, können wie angesprochen die Erfassungseinheiten derart zueinander ausgerichtet sein, dass ihre jeweiligen Erfassungsbereiche gemeinsam einen Überlapp vor den beiden gabelzinken bilden. Dieser Überlapp erhöht die Sicherheit und Redundanz des Flurförderzeugs und kann somit einen Beitrag zu einer erhöhten Sicherheitseinstufung davon leisten.

Wenngleich die Art und Weise der Montage der Erfassungseinheiten an den Gabelzinken zunächst einmal völlig frei ist und auf die konkrete Ausgestaltung und Abmessungen der Gabelzinken sowie der Erfassungseinheiten abgestimmt werden kann, solange eine korrekte Positionierung und Ausrichtung davon ermöglicht ist, so können in einer Ausführungsform die den Gabelzinken zugeordneten Erfassungseinheiten mittels sich im Wesentlichen vertikal erstreckender Anbringungseinheiten mit den Gabelzinken verbunden sein.

Ferner können auch unterschiedliche Typen von Erfassungseinheiten zum Einsatz kommen, solange sie eine ausreichende räumliche Überdeckung bewerkstelligen können, insbesondere können hierfür jedoch bekannte und frei erhältliche Laserscanner oder Ultraschallsensoren zum Einsatz kommen, beispielsweise ESPE-Laserscanner mit einer Mehrzahl von Laserdioden, welche einen breiten Erfassungsbereich überwachen können.

Um einen ausreichenden Schutz der wenigstens einen Erfassungseinheit vor Kollisionen mit möglicherweise auf dem Fahruntergrund befindlichen Objekten sicherstellen zu können, können die Gabelzinken im Bereich dieser wenigstens einen Erfassungseinheit ferner mit Seitenwänden gebildet sein, welche sich bis über die Erfassungseinheiten herab erstrecken und/oder in Längsrichtung zulaufend gebildet sind. Hierbei ist erneut darauf zu achten, dass die entsprechenden Überwachungsbereiche der einzelnen Erfassungseinheiten zugänglich bleiben und von diesen Seitenwänden nicht überdeckt oder beeinträchtigt werden.

Insbesondere können zu diesem Zweck die Gabelzinken in Längsrichtung vor der wenigstens einen Erfassungseinheit mit sich weniger weit herab erstreckenden Seitenwänden versehen sein als im Bereich der wenigstens einen Erfassungseinheit oder frei von solchen Seitenwänden sein, um eine freie Sicht der wenigstens einen Erfassungseinheit zu gewährleisten. Um einen optimalen Schutz der wenigstens einen Erfassungseinheit bei gleichzeitig nicht eingeschränktem Sichtfeld davon zu erzielen, kann die Kontur der sich herab erstreckenden Seitenwände im Wesentlichen der Kontur des Erfassungsbereichs der wenigstens einen Erfassungseinheit entsprechen.

Wenngleich die Kopplung zwischen der wenigstens einen Erfassungseinheit und der Steuereinheit mittels beliebiger bekannter Techniken hergestellt werden könnte, beispielsweise auch mittels drahtloser Übertragung, so kann diese Kopplung in einer Ausführungsform ebenfalls mittels eines Bus-Systems hergestellt sein. Dieses Bus-System kann speziell für diesen Einsatzzweck in dem Flurförderzeug integriert sein oder es kann auf ein ohnehin für den Datenaustausch zwischen einzelnen Komponenten in dem Fahrzeug vorgesehenes Bus-System zurückgegriffen werden.

In ähnlicher Weise kann die Steuereinheit in einer übergeordneten Steuereinheit des Flurförderzeugs integriert oder durch diese gebildet sein oder in einer alternativen Ausführungsform als eigene Komponente ausgeführt und mit der übergeordneten Steuereinheit betriebsmäßig gekoppelt sein.

Zuletzt kann die Steuereinheit auch noch dazu eingerichtet sein, auf Grundlage der von den Erfassungseinheiten empfangenen Daten einen Betriebsmodus des Flurförderzeugs festzulegen, beispielsweise eine erhöhte Fahrgeschwindigkeit des Fahrzeugs nur dann freizugeben, wenn die Auswertung der von den Erfassungseinheiten gelieferten Daten ergeben hat, dass in einem vorbestimmten Bereich um das Flurförderzeug herum und insbesondere in Fahrtrichtung vor diesem keine als problematisch einzustufenden Objekte vorhanden sind.

Weitere Merkmale und Vorteile der vorliegenden Erfindung werden aus der nachfolgenden Beschreibung einer Ausführungsform davon deutlich, wenn diese gemeinsam mit den beiliegenden Figuren betrachtet wird. Diese zeigen im Einzelnen:
- Fig. 1: eine schematische Draufsicht auf ein erfindungsgemäßes Flurförderzeug mit angedeuteten Überwachungsbereichen einer Mehrzahl von Erfassungseinheiten;
- Fig. 2: eine vergrößerte Ansicht der Gabelenden des Flurförderzeugs aus Fig. 1 in einer Detailansicht; und
- Fig. 3: eine Ansicht der Gabelenden aus Fig. 2 von schräg unten.

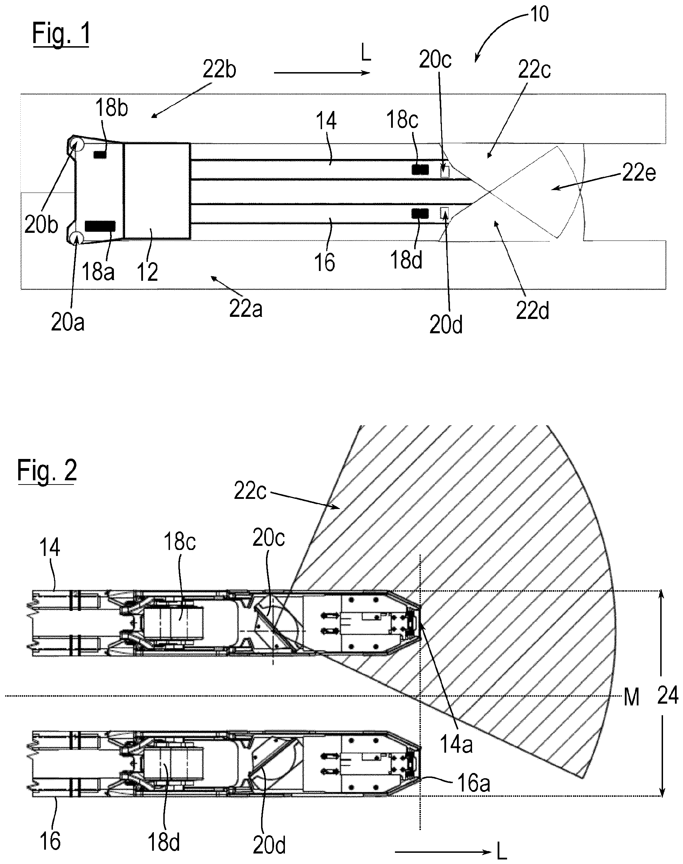

In Fig. 1 ist zunächst einmal ein erfindungsgemäßes Flurförderzeug rein schematisch in einer Draufsicht dargestellt und mit dem Bezugszeichen 10 bezeichnet.

Das Flurförderzeug 10 entspricht hierbei im Wesentlichen einem an sich bekannten Typ eines autonom betreibbaren Hubwagens und umfasst einen Fahrzeugkörper 12 sowie ein Paar sich von dem Fahrzeugkörper 12 zu einem jeweiligen Gabelende 14a, 16a in einer Längsrichtung L erstreckender Gabelzinken 14 und 16, welche mittels eines nicht dargestellten Hubmechanismus zur Aufnahme von Lasten in vertikaler Richtung verlagerbar sind.

In der gezeigten Ausführungsform sind an dem Flurförderzeug 10 insgesamt vier Räder 18a-18d vorgesehen, wobei die beiden Räder 18c und 18d jeweils einem der beiden Gabelzinken 14 und 16 zugeordnet sind, während die übrigen beiden Räder 18a und 18b dem Fahrzeugkörper 12 zugeordnet sind. Alternativ sind selbstverständlich auch Ausführungsformen von erfindungsgemäßen Flurförderzeugen mit einer anderen Konfiguration von Rädern denkbar, beispielsweise mit lediglich drei Rädern, von welchen ein einzelnes dem Fahrzeugkörper 12 und jeweils eines einem der Gabelzinken 14 und 16 zugeordnet ist.

Weiterhin sind in Fig. 1 insgesamt vier Erfassungseinheiten 20a-20d mit jeweiligen Erfassungsbereichen 22a-22d zu erkennen, wobei die beiden Erfassungseinheiten 20a und 20b dem Fahrzeugkörper 12 derart zugeordnet sind, dass sie an seinem in Längsrichtung L hinteren Ende an einer Außenseite davon vorgesehen sind, um gemeinschaftlich sowohl den gesamten Bereich seitlich des Flurförderzeugs 10 als auch hinter dem Flurförderzeug 10 mit ihren Erfassungsbereichen 22a und 22b überdecken zu können.

Demhingegen sind die beiden Erfassungseinheiten 20c und 20d jeweils einem der Gabelzinken 14 und 16 zugeordnet und an der Unterseite des entsprechenden Gabelzinkens 14, 16 an Positionen in Längsrichtung L davon zwischen dem diesem Gabelzinken 14, 16 zugeordneten Rad 18c bzw. 18d und dem jeweiligen Gabelende 14a bzw. 16a angeordnet. Auf diese Weise wird erreicht, dass die beiden Überwachungsbereiche 22c und 22d einen Überlapp 22e aufweisen, welcher in Längsrichtung L bereits auf der in Richtung des Fahrzeugkörpers 12 liegenden Seite der beiden Gabelenden 14a und 14b beginnt, so dass der gesamte Korridor 24 zwischen der jeweiligen Verlängerung der beiden Gabelzinken 14, 16 vor den Gabelenden 14a, 16a überdeckt wird. Gemeinsam mit den Erfassungsbereichen 22a und 22b der beiden dem Fahrzeugkörper 12 zugeordneten Erfassungseinheiten 20a und 20b wird ferner eine Überwachung des gesamten Raums außerhalb des Umrisses des Flurförderzeugs 10 erzielt, ohne dass hierbei irgendwelche Lücken oder Totbereiche entstehen würden.

Zur Verdeutlichung des Überwachungsbereichs 22c der dem Gabelzinken 14 zugeordneten Erfassungseinheit 20c sei ferner auf die Fig. 2 verwiesen, in welcher dieser noch einmal in einer vergrößerten Ansicht dargestellt ist. Hierbei zeigt sich, dass der Erfassungsbereich 22c der Erfassungseinheit 20c etwa 90° beträgt und derart zu dem Gabelzinken 14 orientiert ist, dass die Mittelachse M zwischen den beiden Gabelzinken 14 und 16 von dem Erfassungsbereich 22c bereits vor den beiden Gabelenden 14a und 16c geschnitten wird.

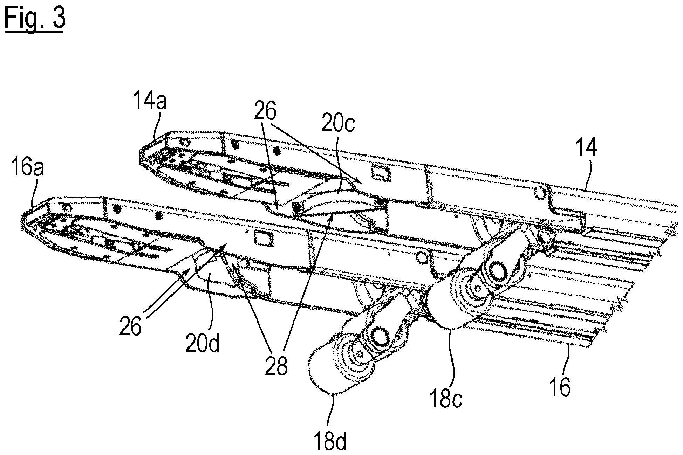

Zuletzt sei auch noch auf Fig. 3 verwiesen, in welcher die Gabelzinken 14 und 16 von schräg unten dargestellt sind, wodurch zu erkennen ist, dass die beiden Erfassungseinheiten 20c und 20d von jeweiligen herabgezogenen Seitenwänden 26 umgeben sind, welche sich in vertikaler Richtung bis über die Erfassungseinheiten 20c und 20d hinab erstrecken und in Längsrichtung L zulaufend gebildet sind, um keine Beeinträchtigung der anhand von Fig. 2 erläuterten Erfassungsbereiche 22c und 22d darzustellen. Insbesondere ist der Bereich in Längsrichtung L vor den Erfassungseinheiten 20c und 20d frei von solchen Seitenwänden und die Kontur der sich herab erstreckenden Seitenwände entspricht im Wesentlichen der Kontur des Erfassungsbereichs der wenigstens einen Erfassungseinheit. Weiterhin ist zu erkennen, dass die Erfassungseinheiten 20c und 20d mittels einfacher Winkelbleche 28 an den Unterseiten der Gabelzinken 14 und 16 angebracht sind.

In der Ansicht aus Fig. 3 ist ebenfalls zu erkennen, dass in der hier gezeigten Ausführungsform die beiden Räder 18c und 18d jeweils als Radpaar ausgebildet sind, welche bei einem Anheben der Gabelzinken 14 und 16 einen dauerhaften Bodenkontakt sicherstellen, jedoch bei einer Anordnung einer Erfassungseinheit in Längsrichtung L hinter ihnen einen erheblichen Totbereich erzeugen würden.

## Patentansprüche

1. Flurförderzeug (10), insbesondere Hubwagen, umfassend:
- einen Fahrzeugkörper (12);
- ein Paar sich von dem Fahrzeugkörper (12) zu einem jeweiligen Gabelende (14a, 16a) in einer Längsrichtung (L) erstreckender Gabelzinken (14, 16);
- eine Mehrzahl von Rädern (18a-18d), mit welchen das Flurförderzeug (10) auf einem Fahruntergrund aufsteht und sich auf diesem in einer angetriebenen und gelenkten Weise fortbewegt, wobei jedem der Gabelzinken (14, 16) wenigstens eines der Räder (18c, 18d) zugeordnet ist;
- einen Hubmechanismus, welcher dazu eingerichtet ist, die Höhe der Gabelzinken (14, 16) über dem Fahruntergrund einzustellen;
- wenigstens eine Erfassungseinheit (20a-20d), welche dazu eingerichtet ist, in einer Umgebung des Flurförderzeugs befindliche Objekte innerhalb eines Erfassungsbereichs (22a-22d) zu erfassen und entsprechende Daten auszugeben; und
- eine Steuereinheit, welche betriebsmäßig mit der wenigstens einen Erfassungseinheit (20a-20d) gekoppelt und dazu eingerichtet ist, die von der wenigstens einen Erfassungseinheit (20a-20d) ausgegebenen Daten zu empfangen und zu verarbeiten;
**dadurch gekennzeichnet, dass** jedem der Gabelzinken (14, 16) eine der Erfassungseinheiten (20c, 20d) zugeordnet ist, wobei die jeweilige Erfassungseinheit (20c, 20d) an der Unterseite des entsprechenden Gabelzinkens (14, 16) an einer Position in Längsrichtung (L) davon zwischen dem diesem Gabelzinken (14, 16) zugeordneten Rad (18c, 18d) bzw. dem vordersten der diesem Gabelzinken zugeordneten Räder und dem Gabelende (14a, 16a) angeordnet ist, und
wobei die den beiden Gabelzinken (14, 16) zugeordneten Erfassungseinheiten (20c, 20d) derart zueinander ausgerichtet sind, dass ihre jeweiligen Erfassungsbereiche (22c, 22d) gemeinsam im Wesentlichen den gesamten durch jeweilige Verlängerungen der beiden Gabelzinken (14, 16) vor den Gabelenden (14a, 16a) gebildeten Korridor (24) überdecken oder
**dadurch gekennzeichnet, dass** wenigstens einem der Gabelzinken (14, 16) eine Erfassungseinheit (20c, 20d) zugeordnet ist, wobei die Erfassungseinheit (20c, 20d) an der Unterseite des entsprechenden Gabelzinkens (14, 16) an einer Position in Längsrichtung (L) davon zwischen dem diesem Gabelzinken (14, 16) zugeordneten Rad (18c, 18d) bzw. dem vordersten der diesem Gabelzinken zugeordneten Räder und dem Gabelende (14a, 16a) angeordnet ist, und
wobei die dem Gabelzinken (14, 16) zugeordnete Erfassungseinheit (20c, 20d) derart angeordnet und ausgebildet ist, dass ihr Erfassungsbereich (22c, 22d) im Wesentlichen den gesamten durch jeweilige Verlängerungen der beiden Gabelzinken (14, 16) vor den Gabelenden (14a, 16a) gebildeten Korridor (24) überdeckt.

2. Flurförderzeug (10) nach Anspruch 1,
**dadurch gekennzeichnet, dass** jede der beiden Erfassungseinheiten (20c, 20d) einen Überwachungsbereich von etwa 90° aufweist, oder dass die einzelne Erfassungseinheit (20c, 20d) einen Überwachungsbereich von etwa 150° aufweist.

3. Flurförderzeug (10) nach Anspruch 1 oder 2,
**dadurch gekennzeichnet, dass** dem Fahrzugkörper (12) ebenfalls wenigstens eine der Erfassungseinheiten (20a, 20b) zugeordnet ist.

4. Flurförderzeug (10) nach Anspruch 3,
**dadurch gekennzeichnet, dass** dem Fahrzeugkörper (12) wenigstens zwei der Erfassungseinheiten (20a, 20b) zugeordnet sind, wobei jeweils eine davon mit einer der den Gabelzinken (14, 16) zugeordneten Erfassungseinheiten (20c, 20d) derart ausgerichtet ist, dass ihre jeweiligen Erfassungsbereiche (22a-22d) gemeinsam wenigstens den gesamten Bereich an einer Seite des Flurförderzeugs (10) überdecken.

5. Flurförderzeug (10) nach Anspruch 4,
**dadurch gekennzeichnet, dass** die dem Fahrzeugkörper (12) zugeordneten Erfassungseinheiten (20a, 20b) und die wenigstens eine den Gabelzinken (14, 16) zugeordnete Erfassungseinheit (20c, 20d) derart angeordnet sind, dass ihre jeweiligen Erfassungsbereiche (22a-22d) gemeinsam im Wesentlichen den gesamten Raum außerhalb des Umrisses des Flurförderzeugs (10) überdecken.

6. Flurförderzeug (10) nach einem der vorhergehenden Ansprüche, **dadurch gekennzeichnet, dass** jedem der Gabelzinken (14, 16) eine der Erfassungseinheiten (20a, 20b) zugeordnet ist und die Erfassungseinheiten (20c, 20d) derart zueinander ausgerichtet sind, dass ihre jeweiligen Erfassungsbereiche (22c, 22d) gemeinsam einen Überlapp (22e) vor den beiden Gabelzinken (14, 16) bilden.

7. Flurförderzeug (10) nach einem der vorhergehenden Ansprüche, **dadurch gekennzeichnet, dass** die wenigstens eine den Gabelzinken (14, 16) zugordnete Erfassungseinheit (20c, 20d) mittels sich im Wesentlichen vertikal erstreckender Anbringungseinheiten (28) mit den Gabelzinken (14, 16) verbunden ist.

8. Flurförderzeug (10) nach einem der vorhergehenden Ansprüche, **dadurch gekennzeichnet, dass** wenigstens eine der Erfassungseinheiten (20a-20d) als Laserscanner ausgebildet ist.

9. Flurförderzeug (10) nach einem der vorhergehenden Ansprüche, **dadurch gekennzeichnet, dass** die Gabelzinken (14, 16) im Bereich der wenigstens einen Erfassungseinheit (20c, 20d) mit Seitenwänden (26) gebildet sind, welche sich bis über die Erfassungseinheit (20c, 20d) herab erstrecken und/oder in Längsrichtung zulaufend gebildet sind.

10. Flurförderzeug (10) nach Anspruch 9,
**dadurch gekennzeichnet, dass** die Gabelzinken (14, 16) in Längsrichtung (L) vor der wenigstens einen Erfassungseinheit (20c, 20d) mit sich weniger weit herab erstreckenden Seitenwänden (26) versehen sind als im Bereich der wenigstens einen Erfassungseinheit (20c, 20d) oder frei von solchen Seitenwänden (26) sind.

11. Flurförderzeug (10) nach Anspruch 10,
**dadurch gekennzeichnet, dass** die Kontur der sich herab erstreckenden Seitenwände (26) im Wesentlichen der Kontur des Erfassungsbereichs (22c, 22d) der wenigstens einen Erfassungseinheit (20c, 20d) entspricht.

12. Flurförderzeug (10) nach einem der vorhergehenden Ansprüche, **dadurch gekennzeichnet, dass** die Kopplung zwischen der Erfassungseinheiten (20a-20d) und der Steuereinheit mittels eines Bus-Systems hergestellt ist.

13. Flurförderzeug (10) nach einem der vorhergehenden Ansprüche, **dadurch gekennzeichnet, dass** die Steuereinheit in einer übergeordneten Steuereinheit des Flurförderzeugs (10) integriert oder durch diese gebildet ist.

14. Flurförderzeug (10) nach einem der vorhergehenden Ansprüche, **dadurch gekennzeichnet, dass** die Steuereinheit dazu eingerichtet ist, auf Grundlage der von den Erfassungseinheiten (20a-20d) empfangenen Daten einen Betriebsmodus des Flurförderzeugs (10) festzulegen.

## Claims

1. Industrial truck (10), in particular a lift truck, comprising:
- a vehicle body (12);
- a pair of fork prongs (14, 16) extending from the vehicle body (12) towards a corresponding fork end (14a, 16a) in a longitudinal direction (L);
- a plurality of wheels (18a-18d) with which the industrial truck (10) stands on a driving surface and moves thereon in a driven and steered manner, at least one of the wheels (18c, 18d) being assigned to each of the fork prongs (14, 16);
- a lifting mechanism, which is designed to adjust the height of the fork prongs (14, 16) above the driving surface;
- at least one detection unit (20a-20d), which is designed to detect objects located in the surroundings of the industrial truck within a detection region (22a-22d) and to output corresponding data; and
- a control unit, which is operatively coupled to the at least one detection unit (20a-20d) and is designed to receive and process the data output by the at least one detection unit (20a-20d);
**characterised in that** one of the detection units (20c, 20d) is assigned to each of the fork prongs (14, 16), the corresponding detection unit (20c, 20d) being arranged on the underside of the corresponding fork prong (14, 16) at a position in the longitudinal direction (L) thereof between the wheel (18c, 18d) assigned to this fork prong (14, 16) or the foremost of the wheels assigned to this fork prong and the fork end (14a, 16a), and
the detection units (20c, 20d) assigned to the two fork prongs (14, 16) being arranged and aligned with respect to one another in such a way that the respective detection regions (22c, 22d) thereof jointly cover substantially the entire corridor (24) formed in front of the fork ends (14a, 16a) by the corresponding extensions of the two fork prongs (14, 16) or
**characterised in that** a detection unit (20c, 20d) is assigned to at least one of the fork prongs (14, 16), the detection unit (20c, 20d) being arranged on the underside of the corresponding fork prong (14, 16) at a position in the longitudinal direction (L) thereof between the wheel (18c, 18d) assigned to this fork prong (14, 16) or the foremost of the wheels assigned to this fork prong and the fork end (14a, 16a), and
the detection unit (20c, 20d) assigned to the fork prongs (14, 16) being arranged and designed in such a way that the detection region (22c, 22d) thereof substantially covers the entire corridor (24) formed in front of the fork ends (14a, 16a) by the corresponding extensions of the two fork prongs (14, 16).

2. Industrial truck (10) according to claim 1,
**characterised in that** each of the two detection units (20c, 20d) has a monitoring region of approximately 90°, or **in that** the individual detection unit (20c, 20d) has a monitoring region of approximately 150°.

3. Industrial truck (10) according to either claim 1 or claim 2,
**characterised in that** at least one of the detection units (20a, 20b) is also assigned to the vehicle body (12).

4. Industrial truck (10) according to claim 3,
**characterised in that** at least two of the detection units (20a, 20b) are assigned to the vehicle body (12), one of which is aligned with respect to one of the detection units (20c, 20d) assigned to the fork prongs (14, 16) in such a way that the corresponding detection regions (22a-22d) thereof jointly cover at least the entire region on one side of the industrial truck (10).

5. Industrial truck (10) according to claim 4,
**characterised in that** the detection units (20a, 20b) assigned to the vehicle body (12) and the at least one detection unit (20c, 20d) assigned to the fork prongs (14, 16) are arranged in such a way that the corresponding detection regions (22a-22d) thereof jointly cover substantially the entire space outside the profile of the industrial truck (10).

6. Industrial truck (10) according to any of the preceding claims,
**characterised in that** one of the detection units (20a, 20b) is assigned to each of the fork prongs (14, 16) and the detection units (20c, 20d) are aligned with respect to one another in such a way that the corresponding detection regions (22c, 22d) thereof jointly form an overlap (22e) in front of the two fork prongs (14, 16).

7. Industrial truck (10) according to any of the preceding claims,
**characterised in that** the at least one detection unit (20c, 20d) assigned to the fork prongs (14, 16) is connected to the fork prongs (14, 16) by means of substantially vertically extending attachment units (28).

8. Industrial truck (10) according to any of the preceding claims,
**characterised in that** at least one of the detection units (20a-20d) is designed as a laser scanner.

9. Industrial truck (10) according to any of the preceding claims,
**characterised in that** the fork prongs (14, 16) in the region of the at least one detection unit (20c, 20d) are formed with side walls (26) extending down over the detection unit (20c, 20d) and/or are formed in a tapered manner in the longitudinal direction.

10. Industrial truck (10) according to claim 9,
**characterised in that** the fork prongs (14, 16), in the longitudinal direction (L) in front of the at least one detection unit (20c, 20d), are provided with side walls (26) extending less far down than in the region of the at least one detection unit (20c, 20d) or are free of such side walls (26).

11. Industrial truck (10) according to claim 10,
**characterised in that** the contour of the downwardly extending side walls (26) substantially corresponds to the contour of the detection region (22c, 22d) of the at least one detection unit (20c, 20d).

12. Industrial truck (10) according to any of the preceding claims,
**characterised in that** the coupling between the detection units (20a-20d) and the control unit is established by means of a bus system.

13. Industrial truck (10) according to any of the preceding claims,
**characterised in that** the control unit is integrated in a higher-level control unit of the industrial truck (10) or is formed thereby.

14. Industrial truck (10) according to any of the preceding claims,
**characterised in that** the control unit is designed to determine an operating mode of the industrial truck (10) on the basis of the data received from the detection units (20a-20d).

## Revendications

1. Chariot de manutention (10), en particulier chariot de levage, comprenant :
- un corps de chariot (12) ;
- une paire de dents de fourche (14, 16) s'étendant depuis le corps de chariot (12) à chaque fois vers une extrémité de fourche (14a, 16a) dans une direction longitudinale (L) ;
- une pluralité de roues (18a - 18d), avec lesquelles le chariot de manutention (10) se tient sur un sol de déplacement et se déplace sur celui-ci de manière entraînée et dirigée, au moins une des roues (18c, 18) est associée à chacune des dents de fourche (14, 16) ;
- un mécanisme de levage, lequel est mis au point pour régler la hauteur des dents de fourche (14, 16) au-dessus du sol de déplacement ;
- au moins une unité de détection (20a - 20d), laquelle est mise au point pour détecter des objets se trouvant dans un environnement du chariot de manutention à l'intérieur d'une zone de détection (22a - 22d) et pour fournir des données correspondantes ; et
- une unité de commande, laquelle est couplée conformément au fonctionnement à l'au moins une unité de détection (20a - 20d) et est mise au point pour recevoir et traiter les données fournies par l'au moins une unité de détection (20a - 20d) ;
**caractérisé en ce qu'**une des unités de détection (20c, 20d) est associée à chacune des dents de fourche (14, 16), l'unité de détection (20c, 20d) respective étant disposée sur le côté inférieur de la dent de fourche (14, 16) correspondante à une position dans la direction longitudinale (L) de celle-ci entre la roue (18c, 18d) associée à ladite dent de fourche (14, 16) ou la roue la plus en avant des roues associées à ladite dent de fourche et l'extrémité de fourche (14a, 16a), et
dans lequel les unités de détection (20c, 20d) associées aux deux dents de fourche (14, 16) sont orientées les unes par rapport aux autres de telle manière que leurs zones de détection (22c, 22d) respectives recouvrent conjointement sensiblement la totalité du corridor (24) formé par des prolongements respectifs des deux dents de fourche (14, 16) avant les extrémités de fourche (14a, 16a) ou
**caractérisé en ce qu'**une unité de détection (20c, 20d) est associée au moins à une des dents de fourche (14, 16), l'unité de détection (20c, 20d) étant disposée sur le côté inférieur de la dent de fourche (14, 16) correspondante à une position dans la direction longitudinale (L) de celle-ci entre la roue (18c, 18d) associée à ladite dent de fourche (14, 16) ou la roue la plus en avant des roues associées à ladite dent de fourche et l'extrémité de fourche (14a, 16a), et
dans lequel l'unité de détection (20c, 20d) associée à la dent de fourche (14, 16) est disposée et réalisée de telle manière que sa zone de détection (22c, 22d) recouvre sensiblement la totalité du corridor (24) formé par les prolongements respectifs des deux dents de fourche (14, 16) avant les extrémités de fourche (14a, 16a).

2. Chariot de manutention (10) selon la revendication 1,
**caractérisé en ce que** chacune des deux unités de détection (20c, 20d) présente une zone de surveillance d'environ 90°, ou que l'unité de détection (20c, 20d) individuelle présente une zone de surveillance d'environ 150°.

3. Chariot de manutention (10) selon la revendication 1 ou 2,
**caractérisé en ce qu'**également une des unités de détection (20a, 20b) est associée au corps de chariot (12).

4. Chariot de manutention (10) selon la revendication 3,
**caractérisé en ce qu'**au moins deux des unités de détection (20a, 20b) sont associées au corps de chariot (12), dans lequel à chaque fois une d'elles est orientée avec une des unités de détection (20c, 20d) associées aux dents de fourche (14, 16) de telle manière que ses zones de détection (22a - 22d) respectives recouvrent conjointement au moins la totalité de la zone sur un côté du chariot de manutention (10).

5. Chariot de manutention (10) selon la revendication 4,
**caractérisé en ce que** les unités de détection (20a, 20b) associées au corps de chariot (12) et l'au moins une unité de détection (20c, 20d) associée aux dents de fourche (14, 16) sont disposées de telle manière que leurs zones de détection (22a - 22d) respectives recouvrent conjointement sensiblement la totalité de l'espace à l'extérieur du contour du chariot de manutention (10).

6. Chariot de manutention (10) selon l'une des revendications précédentes, **caractérisé en ce qu'**une des unités de détection (20a, 20b) est associée à chacune des dents de fourche (14, 16) et les unités de détection (20c, 20d) sont orientées de telle manière les unes par rapport aux autres que leurs zones de détection (22c, 22d) respectives forment conjointement un chevauchement (22e) avant les deux dents de fourche (14, 16).

7. Chariot de manutention (10) selon l'une des revendications précédentes, **caractérisé en ce que** l'au moins une unité de détection (20c, 20d) associée aux fourches de dent (14, 16) est reliée aux dents de fourche (14, 16) au moyen d'unités d'installation (28) s'étendant sensiblement de manière verticale.

8. Chariot de manutention (10) selon l'une des revendications précédentes,
**caractérisé en ce qu'**au moins une des unités de détection (20a - 20d) est réalisée en tant que scanner laser.

9. Chariot de manutention (10) selon l'une es revendications précédentes, **caractérisé en ce que** les dents de fourche (14, 16) sont formées dans la zone de l'au moins une unité de détection (20c, 20d) avec des parois latérales (26), lesquelles s'étendent vers le bas jusqu'au-dessus de l'unité de détection (20c, 20d) et/ou sont formées de manière pointue dans la direction longitudinale.

10. Chariot de manutention (10) selon la revendication 9,
**caractérisé en ce que** les dents de fourche (14, 16) sont pourvues avant l'au moins une unité de détection (20c, 20d) dans la direction longitudinale (L) de parois latérales (26) s'étendant vers le bas moins loin que dans la zone de l'au moins une unité de détection (20c, 20d) ou sont dépourvues de telles parois latérales (26).

11. Chariot de manutention (10) selon la revendication 10,
**caractérisé en ce que** le contour des parois latérales (26) s'étendant vers le bas correspond sensiblement au contour de la zone de détection (22c, 22d) de l'au moins une unité de détection (20c, 20d).

12. Chariot de manutention (10) selon l'une des revendications précédentes,
**caractérisé en ce que** le couplage entre les unités de détection (20a - 20d) et l'unité de commande est établi au moyen d'un système de bus.

13. Chariot de manutention (10) selon l'une des revendications précédentes,
**caractérisé en ce que** l'unité de commande est intégrée dans une unité de commande supérieure du chariot de manutention (10) ou est formée par celle-ci.

14. Chariot de manutention (10) selon l'une des revendications précédentes, **caractérisé en ce que** l'unité de commande est mise au point pour fixer un mode de fonctionnement du chariot de manutention (10) sur la base des données reçues des unités de détection (20a - 20d).
